# EUROPÄISCHE PATENTANMELDUNG

(11) **EP 3 318 134 A1**
(43) Veröffentlichungstag der Anmeldung: **09.05.2018**
(21) Anmeldenummer: 16197224.5
(22) Anmeldetag: 04.11.2016
(51) Int. Cl.: A23F 3/40, A23L 2/52, A23L 2/56, A23L 2/72, A23F 5/46, A23L 27/28, A23F 3/16, A23F 5/24

(54) **VERFAHREN ZUR HERSTELLUNG EINES FLÜSSIGEN LEBENSMITTELS SOWIE FLÜSSIGES LEBENSMITTEL**

(71) Anmelder: C.T.L. GmbH & Co.KG, 72488 Sigmaringen (DE)
(72) Erfinder: RAKEL, Ralf, 72488 Sigmaringen (DE)
(74) Vertreter: Engelhardt, Volker

(57) **Zusammenfassung**

Bei einem Verfahren zur Herstellung eines flüssigen Lebensmittels (11), aus einem limonadenartigen Getränk (9), das auf Basis von natürlichem Mineralwasser, Trinkwasser (3) oder Tafelwasser mit oder ohne Kohlensäure gebildet ist und in dem mindestens einer der folgenden Inhaltsstoffe beigemischt ist:
Zucker, Steviolglycosid Farbstoff, Ammonsulfit-Zuckerkulör, natürliche Aromen und Aroma, Säuerungsmittel, Zitronensäure mit Antioxydationsmittel, soll ein neues Lebensmittel sowohl mit einem limonadeartigen Geschmack als auch mit zusätzlichen Kaffee und/oder Kakaogeschmack und/oder Teegeschmack herstellbar sein.

Diese Aufgabe ist durch die folgenden Verfahrensschritte gelöst:

Beimischen oder Einfüllen von mit Kaffeearomen und/oder Kakaoaromen und/oder Teearomen versetzten Trinkwassers (6) in das Getränk (9) zur Erzeugung des Lebensmittels (11).

## Beschreibung

Die Erfindung bezieht sich auf ein Verfahren zur Herstellung eines flüssigen Lebensmittels aus einem limonadenartigen Getränk nach dem Oberbegriff des Patentanspruches 1 sowie auf ein Lebensmittel nach dem Oberbegriff des Patentanspruches 6.

Derartige flüssige Lebensmittel sind beispielsweise aus der DE 20 2012 006 994 U1 zu entnehmen. Seit Jahren werden von verschiedenen Herstellern eine Vielzahl von geschmacklich unterschiedlichen flüssigen Lebensmitteln angeboten. Diese Lebensmittel weisen völlig andersartige Inhaltsstoffe und damit Geschmacksrichtungen sowie Wirkungen bei dem Konsum auf.

Es ist Aufgabe der Erfindung, ein Lebensmittel der eingangs genannten Gattung derart weiterzubilden, dass dieses nicht nur einen limonadenartigen Geschmack, sondern vielmehr zusätzlich einen Kaffee- und/oder Kakaogeschmack und/oder Teegeschmack aufweist und dass die entsprechenden Eigenschaften der Kakao- bzw. Kaffeebohnen bzw. dem Teearomen dem Lebensmittel beigemischt sind.

Diese Aufgabe ist erfindungsgemäß durch die Merkmale des kennzeichnenden Teils von Patentanspruch 1 bzw. 6 gelöst.

Weitere vorteilhafte Weiterbildungen der Erfindung ergeben sich aus den Unteransprüchen.

Wenn dem limonadenartigen Getränk mit Kaffeebohnen und/oder Kakaobohnen versetztes Trinkwasser beigemischt oder eingefüllt ist, entsteht ein flüssiges Lebensmittel, das sowohl einen limonadenartigen bzw. zitronenhaften als auch einen Tee- bzw. Kaffee- bzw. Kakaogeschmack aufweist.

Die Herstellung solcher flüssiger Lebensmittel kann dadurch erreich sein, dass dem flüssigen Getränk Trinkwasser beigemischt ist, in dem die Kaffee- und/oder Kakaobohnen bzw. ihre Aromabestandteile abgegeben haben. Das mit Tee-, Kaffee- und /oder Kakaoaromastoffen versetzte Trinkwasser kann dabei kalt oder heiß gebrüht sein. Beim Kaltbrühen des mit Aromastoffen versetzten Trinkwassers wird das natürliche Trinkwasser zunächst in einen Behälter eingefüllt, in dem Teeblätter oder Teearomen bzw. Kaffee- und /oder Kakaobohnen vorhanden sind. Nach einer vorgegebenen Stillstandszeit, in dem das natürliche Trinkwasser die Tee-, Kaffee- und/oder Kakaoaromastoffe aufnimmt, wird dieses abgelassen und durch einen Filter werden die Teebestandteile bzw. die Kaffee- und/oder Kakaobohnen ausgesiebt. Beim Warmbrühen der mit Tee-, Kaffee- und/oder Kakaoaromastoffen versetzen Trinkwassers wird das Trinkwasser zunächst erhitzt und beispielsweise über gemahlene Kaffee- und/oder Kakaobohnen geleitet. Durch einen Filter werden die Teebestandteile, Kaffee- und/oder Kakaobohnen zurückgehalten und das mit den Kakaound/oder Kaffeearomastoffen versetzte Trinkwasser wird dem limonenartigen Getränk beigemischt.

Das Mischungsverhältnis kann individuell nach den jeweiligen Geschmacksrichtungen eingestellt sein, so dass der Anteil des limonenartigen Getränks an dem flüssigen Lebensmittel zwischen 5 bis 95 Volumen-% liegen kann. Der jeweilige Konsument des erfindungsgemäßen flüssigen Lebensmittels kann daher nach eigenen Geschmacksempfindungen und der gewünschten Wirkung das Mischungsverhältnis zwischen dem limonenartigen Getränk und dem mit Tee-, Kaffee- und/oder Kakaoaromastoffen versetzten Trinkwasser einstellen.

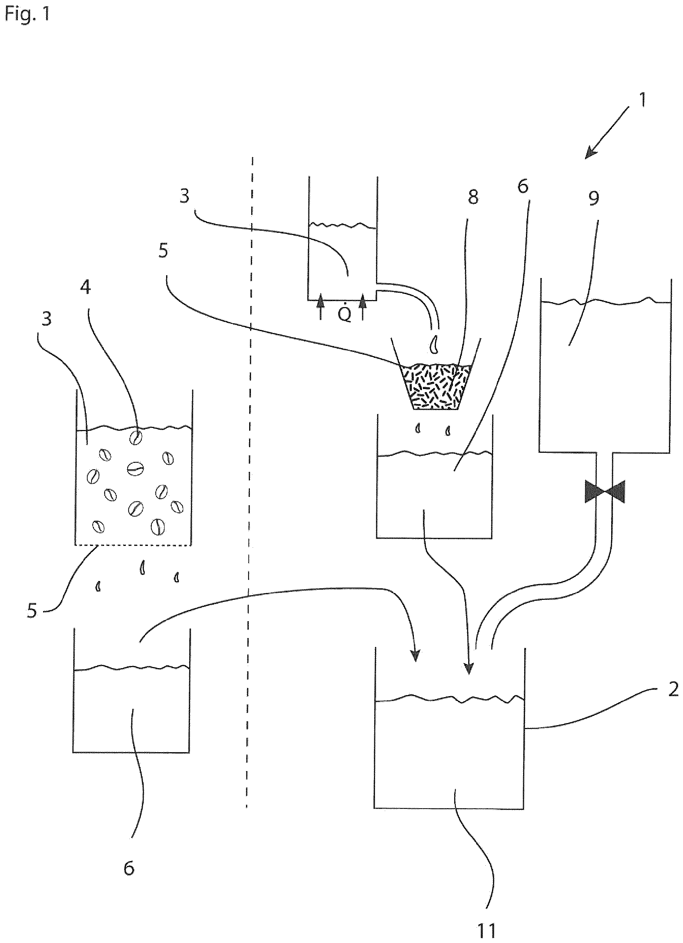

In der einzigen Figur ein erfindungsgemäßes Herstellungsverfahren zur Erzeugung des flüssigen Lebensmittels 11 dargestellt, wobei das mit Tee-, Kaffee- und/oder Kakaoaromastoffen versetzte Trinkwasser in zwei unterschiedlichen Herstellungsabläufen produzierbar ist. In der Figur ist ein Herstellungsprozess zur Erzeugung eines flüssigen Lebensmittels 11 zu entnehmen. Dabei ist in einem Gefäß oder Behälter 2 ein natürliches Trinkwasser 3 mit oder ohne Kohlensäure vorgesehen. Zudem sind in dem Behälter 2 Kaffeebohnen 4 eingefüllt, die in unmittelbarem Wirkkontakt mit dem Trinkwasser 3 gelangen, so dass nach einer vorgegebenen Ruhezeit des Trinkwassers 3 mit den von den Kaffeebohnen 4 abgegebenen Kaffeearomastoffen versetzt ist. Wahlweise können die Kaffeebohnen 4 auch durch Kakaobohnen und/oder Teearomen ersetzt werden bzw. die Kaffee- und/oder Kakaobohnen und/oder Teearomen können in einem vorgegebenen Mischungsverhältnis in dem Behälter 2 eingefüllt sein, so dass das Trinkwasser 3 mit Kaffee- als auch mit Kakaoaromastoffen als auch mit Teearomen versetzt sein kann.

Nach Ablauf der vorgegebenen Ruhezeit wird das mit Tee-, Kaffee- und/oder Kakaoaromastoffen versetzte Trinkwasser, das nunmehr mit der Bezugsziffer 6 versehen ist, durch einen Filter 5 in ein weiteres Gefäß 2 geleitet bzw. kann unmittelbar mit einem limonenartigen Getränk 9 zum erfindungsgemäßen flüssigen Lebensmittel 11 zusammengemischt sein. Das limonenartige Getränk 9 ist auf Basis von natürlichen Mineralwasser, Tinkwasser 3 oder Tafelwasser mit oder ohne Kohlensäure gebildet und enthält mindestens einer der folgenden Inhaltsstoffe, nämlich Steviolglycosid, Zucker, Farbstoff, Ammonsulfit-Zuckerkulör, natürliche Aromen und Aroma, Säuerungsmittel, Zitronensäure mit Antioxydationsmitteln.

Des Weiteren ist der Figur zu entnehmen, dass das natürliche Trinkwasser 3 in einem Gefäß 2 erhitzt werden kann. Die Wärmezufuhr ist symbolisch mit dem Buchstaben Q und zwei Pfeilen gekennzeichnet. Das derart erhitzte Trinkwasser 3 wird tropfenweise in ein weiteres Gefäß 2 eingeleitet, in dem gemahlene Kaffeebohnen 4 eingefüllt sind. Durch einen Filter 5 wird das mit Kaffeearomastoffen versetzte Trinkwasser 6 in ein weiteres Gefäß 2 oder unmittelbar mit dem limonadenartigen Getränk 9 vermischt.

Das jeweilige Mischungsverhältnis zwischen den mit Kaffeearomastoffen versetzten Trinkwasser 6 und dem limonadenartigen Getränk 9 kann dabei in einem Größenordnungsbereich von 5 bis 95 Volumen-% liegen bezogen auf jeweils eines der beiden Bestandteile 6 oder 9.

Falls eine kombinierte Geschmacksrichtung aus den drei Aromastoffen Kaffee, Tee und Kakao erzeug sein soll, hängt das Mischungsverhältnis von den Anteilen dieser drei Aromenbestandteile ab.

## Patentansprüche

1. Verfahren zur Herstellung eines flüssigen Lebensmittels (11), aus einem limonadenartigen Getränk (9), das auf Basis von natürlichem Mineralwasser, Trinkwasser (3) oder Tafelwasser mit oder ohne Kohlensäure gebildet ist und in dem mindestens einer der folgenden Inhaltsstoffe beigemischt ist:
Zucker, Steviolglycosid Farbstoff, Ammonsulfit-Zuckerkulör, natürliche Aromen und Aroma, Säuerungsmittel, Zitronensäure mit Antioxydationsmittel,
**gekennzeichnet durch** den Verfahrensschritt:
- Beimischen oder Einfüllen von mit Kaffeearomen und/oder Kakaoaromen und/oder Teearomen versetzten Trinkwassers (6) in das Getränk (9) zur Erzeugung des Lebensmittels (11).

2. Verfahren nach Anspruch 1,
**gekennzeichnet durch** die vorgeschalteten Verfahrensschritte:
- Erhitzen des Trinkwassers (3),
- Einfüllen des erhitzten Trinkwassers (3) in einen mit Kaffee (4) - und/oder Kakaobohnen und/oder Teearomen gefüllten Gefäß (2), derart, dass das Trinkwasser (3) in unmittelbarem Kontakt mit den Kaffee- (4) und/oder Kakaobohnen und/oder Teearomen gelangt, und von diesen die Kaffee- und/oder Kakaoaromastoffe und/oder Teearomen aufnimmt, und
- Vermischen des mit Kaffee- und/oder Tee- und/oder Kakaoaromastoffen versetzten Trinkwassers (6) mit dem limonadenartigen Getränk (9) zur Erzeugung des Lebensmittels (11), das einen kaffee- und/oder tee- und/oder kakaoaromen- sowie limonadenartigen Geschmack aufweist.

3. Verfahren nach Anspruch 2,
**dadurch gekennzeichnet,**
**dass** das mit Kaffee- und/oder Tee- und/oder Teearomen und/oder Kakaoaromastoffen versetzte Trinkwasser (6) vor der Beimischung in das limonadenartige Getränk (9) auf dessen identische Temperatur gebracht ist, und/oder dass das Trinkwasser (6) und das Getränk (9) in einen Druckbehälter eingefüllt gleichmäßig vermischt und in diesem gleichmäßig vermischt sind.

4. Verfahren nach Anspruch 1,
**gekennzeichnet durch** die vorgeschalteten Verfahrensschritte:
- Einfüllen von Trinkwasser (3) in einen Behälter (2), in dem Kaffee- (4) und/oder Teearomen und/oder Kakaobohnen vorhanden sind,
- Ruhen der Gemische aus Trinkwasser (3) und Kaffee- (4) und/oder Teearomen und/oder Kakaobohnen über einen vorgegebenen Zeitraum und
- Ablassen und Filtern des Trinkwassers (6), bevor dieses mit dem limonadeartigen Getränk (9) zusammengemischt ist, insbesondere Filtern in vereinzelten Tropfen.

5. Verfahren nach Anspruch 4,
**dadurch gekennzeichnet,**
**dass** das Trinkwasser (3) eine Temperatur von 1 Grad bis 40 Grad aufweist, bevor dieses mit den Kaffee- (4) und/oder Teearomen und/oder Kakaobohnen in Kontakt gelangt.

6. Lebensmittel, aus einem limonadenartigen Getränk (9), das auf Basis von natürlichem Mineralwasser, Trinkwasser (3) oder Tafelwasser mit oder ohne Kohlensäure gebildet ist und in dem mindestens einer der folgenden Inhaltsstoffe beigemischt ist:
Steviolglycosid, Zucker, Farbstoff, Ammonsulfit-Zuckerkulör, natürliche Aromen und Aroma, Säuerungsmittel, Zitronensäure mit Antioxydationsmittel,
**dadurch gekennzeichnet,**
**dass** dem Getränk (9) Trinkwasser (6) beigemischt ist, das mit Tee- und/oder Kaffeearomen und/oder Kakaoaromen angereichert ist.

7. Lebensmittel nach Anspruch 6,
**dadurch gekennzeichnet,**
**dass** die Bestandteile des Lebensmittels (11) unmittelbar vor deren Vermischung identisch temperiert sind.
